# EUROPÄISCHE PATENTANMELDUNG

(11) **EP 0 740 382 A1**
(43) Veröffentlichungstag der Anmeldung: **30.10.1996**
(21) Anmeldenummer: 96250094.8
(22) Anmeldetag: 25.04.1996
(51) Int. Cl.: H02H 7/09

(54) **Anordnung mit einem an ein elektrisches Energieversorgungsnetz über einen Leistungsschalter angeschlossenen Leitungsabgang mit mindestens einem Verbraucher und mit einer Spannungs-Schutzanordnung**

(30) Priorität: 25.04.1995 DE 19516618
(71) Anmelder: SIEMENS AKTIENGESELLSCHAFT, 80333 München (DE)
(72) Erfinder: Fritschi, Jürgen, 13353 Berlin (DE)

(57) **Zusammenfassung**

Die Erfindung bezieht sich auf eine Anordnung mit einem an ein elektrisches Energieversorgungsnetz über einen Leistungsschalter angeschlossenen Leitungsabgang mit mindestens einem Verbraucher und mit einer Spannungs-Schutzanordnung für den Verbraucher. Die Schutzanordnung ist über eine Spannungswandler-Anordnung angeschlossen.

Um Überspannungen zuverlässig ohne unnötiges Blockieren des Leistungsschalters erfassen zu können, ist die Überspannungs-Schutzanordnung (12) erfindungsgemäß über die Spannungswandler-Anordnung (8) mit dem energieversorgungsnetzseitigen Anschluß des Leistungsschalters (2) und eine Stromwandler-Anordnung (3) mit dem Leitungsabgang (1) verbunden und so ausgebildet, daß sie ein Spannungsüberschreitungssignal (U_{ü}) erzeugt, wenn die Spannung oberhalb eines vorgegebenen Spannungsschwellenwertes (U_{S}) liegt. Außerdem bildet die Schutzanordnung (12) ein Stromüberschreitungssignal (I_{ü}), wenn der Strom durch den Leitungsabgang (1) oberhalb eines vorgegebenen Stromschwellenwertes (I_{S}) liegt. Die Schutzanordnung (12) erzeugt ein Anregesignal (An), wenn das Spannungsüberschreitungssignal (U_{ü}) und das Stromüberschreitungssignal (I_{ü}) gleichzeitig auftreten.

## Beschreibung

Dem "Handbuch Schutztechnik" von W.Doemeland, 5. Auflage, 1995, Seite 118, ist entnehmbar, daß eine Spannungs-Schutzanordnung besonders in Anlagen mit Motorabgängen erforderlich ist. Dabei sind mit "Motorabgängen" offenbar Leitungsabgänge von einem elektrischen Energieversorgungsnetz gemeint, die mindestens einen Verbraucher in Form eines Motors enthalten und über einen Leistungsschalter an das Energieversorgungsnetz angeschlossen sind. Die Spannungs-Schutzanordnung kann dabei offensichtlich über eine Spannungswandler-Anordnung angeschlossen sein. Bei der bekannten Anordnung ist die Spannungs-Schutzanordnung als Unterspannungs-Schutzanordnung ausgebildet, um ein Absinken der Spannung unter einen für den Motor kritischen Spannungsschwellenwert erfassen und den Leistungsschalter auslösen zu können.

Die Erfindung geht von der bekannten Anordnung aus und betrifft demzufolge eine Anordnung mit einem an ein elektrisches Energieversorgungsnetz über einen Leistungsschalter angeschlossenen Leitungsabgang mit mindestens einem Verbraucher und mit einer Spannungs-Schutzanordnung für den mindestens einen Verbraucher, bei der die Spannungs-Schutzanordnung über eine Spannungswandler-Anordnung angeschlossen ist, und stellt sich die Aufgabe, diese Anordnung so auszugestalten, daß Überspannungen zuverlässig ohne unnötiges Blockieren des Leistungsschalters erfaßt werden können.

Zur Lösung dieser Aufgabe ist bei der oben behandelten Anordnung erfindungsgemäß bei einer Spannungs-Schutzungsanordnung als Überspannungs-Schutzanordnung die Schutzanordnung über die Spannungswandler-Anordnung mit dem energieversorungsnetzseitigen Anschluß des Leistungsschalters verbunden, an die Überspannungs-Schutzanordnung eine im Zuge des Leistungsschalters liegende Stromwandler-Anordnung angeschlossen und die Überspannungs-Schutzanordnung so ausgebildet, daß sie ein Spannungsüberschreitungssignal erzeugt, wenn die mittels der Spannungswandler-Anordnung erfaßte Spannung oberhalb eines vorgegebenen Spannungsschwellenwertes liegt, und ein Stromüberschreitungssignal bildet, wenn der mittels der Stromwandler-Anordnung ermittelte Strom durch den Leitungsabgang oberhalb eines vorgegebenen Stromschwellenwertes liegt, sowie ein Anregesignal erzeugt, wenn das Spannungsüberschreitungssignal und das Stromüberschreitungssignal gleichzeitig auftreten.

Der wesentliche Vorteil der erfindungsgemäßen Anordnung besteht darin, daß bei ihr von der Überspannungs-Schutzanordnung ein Anregesignal nur dann erzeugt wird, wenn mit dem Spannungsüberschreitungssignal gleichzeitig das Stromüberschreitungssignal auftritt. Dies bedeutet, daß bei einem auf das Anregesignal hin erzeugten Auslösesignal für den Leistungsschalter die Anregung der Überspannungs-Schutzanordnung stets selbsttätig zurückgenommen wird, weil das Stromüberschreitungssignal wegen des dann geöffneten Leistungsschalters verschwindet. Das Auslösesignal am Leistungsschalter wird damit beendet, so daß der Leistungsschalter beispielsweise nach Beheben des Fehlers im Leitungsabgang ohne weiteres auf einen Einschaltbefehl reagieren kann, weil von der Überspannungs-Schutzanordnung ein Anrege- bzw. Auslösesignal nicht mehr bereitgestellt ist. Zusätzliche Schaltungsmaßnahmen, um das Anregesignal bzw. das Auslösesignal zu beenden, sind bei der erfindungsgemäßen Anordnung demzufolge nicht erforderlich.

Bei der erfindungsgemäßen Anordnung hat es sich als vorteilhaft erwiesen, wenn die Überspannungs-Schutzanordnung derart ausgebildet ist, daß sie auf das Anregesignal hin nach einer vorgegebenen Zeitverzögerung ein Auslösesignal an den Leistungsschalter abgibt. Diese vorgegebene Zeitverzögerung verhindert, daß bereits durch ein kurzzeitiges Ansteigen der Spannung über den vorgegebenen Spannungsschwellenwert ein Anregesignal erzeugt wird.

Bei einer weiteren vorteilhaften Ausbildung der erfindungsgemäßen Anordnung ist die Überspannungs-Schutzanordnung so ausgebildet, daß sie nach einem auf das Auslösesignal folgenden Einschaltbefehl an den Leistungsschalter das Stromüberschreitungssignal nach einer vorgewählten Zeitdauer wirksam werden läßt. Vorteil dieser Ausgestaltung der erfindungsgemäßen Anordnung ist, daß nicht sofort nach dem (Wieder-)Einschaltbefehl erneut eine Anregung durch die Überspannungs-Schutzanordnung gegeben wird, sondern erst die vorgegebene Zeitdauer nach dem Auftreten des Stromüberschreitungssignal mit der Prüfung abgewartet wird, ob die Spannung am Leistungsschalter den Spannungsschwellenwert noch nicht unterschritten hat, um dann gegebenenfalls ein erneutes Anregesignal zu erzeugen.

Als besonders vorteilhaft wird eine weitere Ausgestaltung der erfindungsgemäßen Anordnung angesehen, bei der die Überspannungs-Schutzanordnung so ausgebildet ist, daß sie nach dem Einschaltbefehl die Spannung auf Unterschreiten eines vorgewählten Rückfallspannungswertes überprüft, der unterhalb des vorgegebenen Spannungsschwellenwertes liegt, und ein Betätigungssignal erzeugt, wenn das Unterschreiten des Rückfallspannungswertes nach Ablauf der vorgewählten Zeitdauer erfolgt. Dies bedeutet, daß die Spannung nach dem Einschaltbefehl ausreichend schnell auf den Rückfallspannungswert abfallen muß, um eine erneute Anregung zu vermeiden.

Zur Erläuterung der Erfindung ist in
- Figur 1: ein Ausführungsbeispiel einer erfindungsgemäßen Anordnung, in
- Figur 2: ein Logik-Diagramm zur Erläuterung der Wirkungsweise der in Figur 1 dargestellten Anordnung und in
- Figur 3: eine Darstellung mit mehreren Zeitdiagrammen zur weiteren Erläuterung der Wirkungsweise der Anordnung nach Figur 1 wiedergegeben.

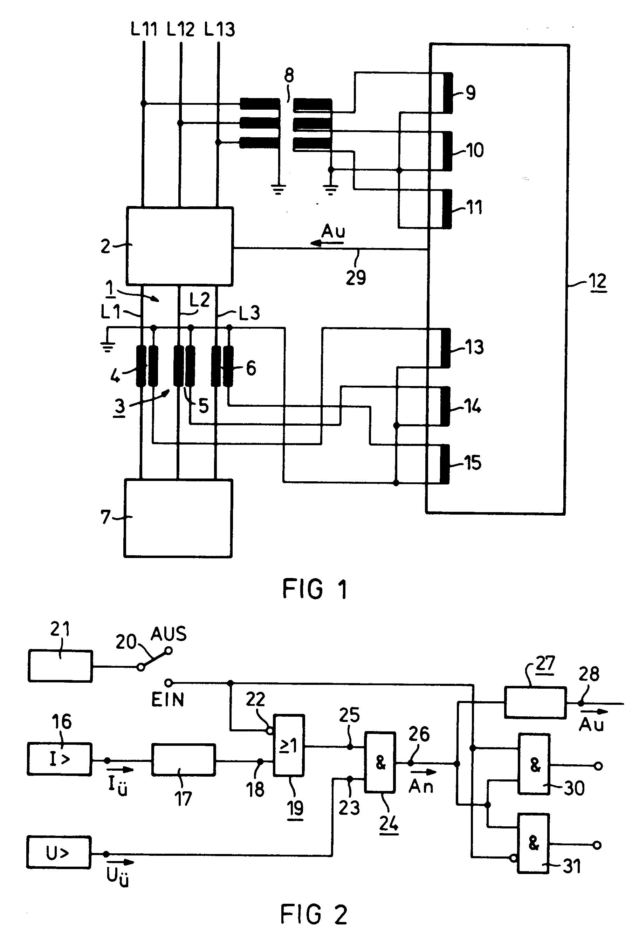

Die in Figur 1 dargestellte Anordnung weist einen Leitungsabgang 1 mit Leitungen L1, L2 und L3 auf, die einerseits an einen Leistungsschalter 2 und andererseits über eine Stromwandler-Anordnung 3 mit Stromwandlern 4, 5 und 6 an einen Verbraucher in Form eines Motors 7 geführt sind. Der Leistungsschalter 2 ist auf seiner von dem Leitungsabgang 1 abgewandten Seite über Leitungen L11, L12 und L13 an ein nicht dargestelites elektrisches Energieversorgungsnetz, z.B. eine Sammelschiene, angeschlossen. Die Stromwandler-Anordnung 3 kann auch auf der Energieversorgungsnetzseite des Leistungsschalters 2 angeordnet sein.

Wie die Figur 1 ferner erkennen läßt, ist mit den Leitungen L11 bis L13 primärseitig auch eine Spannungswandler-Anordnung 8 verbunden, die sekundärseitig über Wicklungen 9, 10 und 11 den Spannungen an den Leitungen L11 bis L13 proportionale Spannungen an eine Überspannungs-Schutzanordnung 12 überträgt. Über weitere Wicklungen 13, 14 und 15 der Überspannungs-Schutzanordnung, die an Sekundärwicklungen der Stromwandler-Anordnung 3 angeschlossen sind, wird die Überspannungs-Schutzanordnung 12 mit den Strömen in den Leitungen L1 bis L3 proportionalen Strömen versorgt.

In der Überspannungs-Schutzanordnung 12, die im wesentlichen aus einer Datenverarbeitungsanlage besteht, werden aus den analogen Größen an den Wicklungen 9 bis 11 sowie 13 bis 15 entsprechende digitale Eingangsgrößen gebildet, die - wie nachstehend im einzelnen erläutert wird - in verschiedener Hinsicht untersucht und verarbeitet werden.

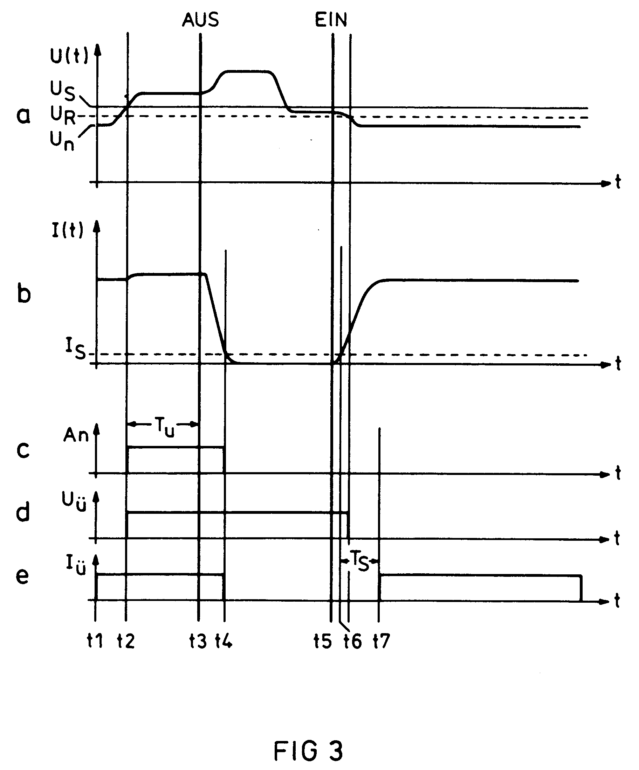

So wird in der Überspannungs-Schutzanordnung 12 der jeweils größte Strom in den Leitungen L1 bis L3 erfaßt und darauf untersucht, ob er oberhalb eines Stromschwellenwertes I_{S} liegt (vgl. Diagramm b der Fig. 3). Ist dies der Fall, dann wird von einem Block 16 ein Stromüberschreitungssignal I_{ü} erzeugt, das nach Ablauf einer durch ein Zeitglied 17 (vgl. Figur 2) bestimmten Zeitdauer T_{S} an einem Eingang 18 eines dem Zeitglied 17 nachgeordneten ODER-Gliedes 19 ansteht. Ist über einen in eine "Ein"-Stellung gebrachten Kontakt 20 ein Impulsgeber 21 angeschlossen, dann wird einem weiteren invertierenden Eingang 22 des ODER-Gliedes 19 ein "1"-Signal zugeführt, woraufhin am Ausgang des ODER-Gliedes 22 ein "1"-Signal gebildet wird. Das Diagramm e der Figur 3 zeigt, daß zum Zeitpunkt t1 das Stromüberschreitungssignal I_{ü} am Ausgang des ODER-Gliedes 19 auftritt.

Wie insbesondere das Diagramm a der Figur 3 zeigt, ist aufgrund eines angenommenen Fehlers im Leitungsabgang 1 bzw. im Motor 7 die Spannung U(t) von einem Nennwert Uₙ soweit angestiegen, daß sie zum Zeitpunkt t2 einen Spannungsschwellenwert U_{S} überschreitet. Als Spannung U(t) wird die jeweils größte Spannung an den Leitungen L11 bis L13 verwendet. Es ergibt sich dann an einem Eingang 23 eines UND-Gliedes 24 (siehe Figur 2) ein Spannungsüberschreitungssignal U_{ü} mit dem Wert"1",wie es im Diagramm d der Figur 3 veranschaulicht ist.

Da zum Zeitpunkt t2 nach wie vor das Stromüberschreitungssignal I_{ü} an dem anderen Eingang 25 des UND-Gliedes 24 ansteht (vgl. Diagramm e der Figur 3), wird am Ausgang 26 des UND-Gliedes 24 zum Zeitpunkt t2 ein Anregesignal An erzeugt, wie es in dem Diagramm c der Figur 3 wiedergegeben ist. Dieses Anregesignal An wird - siehe Fig. 2 - einem weiteren Zeitglied 27 zugeführt, mit dem eine vorgegebene Zeitdauer Tᵤ eingestellt ist. Ist diese vorgegebene Zeitdauer Tᵤ verstrichen, was gemäß der Figur 3 zum Zeitpunkt t3 der Fall ist, dann entsteht am Ausgang 28 des weiteren Zeitgliedes 27 ein Auslösesignal Au, das über eine Verbindungsleitung 29 auf den Leistungsschalter 2 übertragen wird.

Der Leistungsschalter 2 öffnet daraufhin, wodurch der Leitungsabgang 1 von dem nicht dargestellten elektrischen Energieversorgungsnetz abgetrennt wird. Dies führt zu einem weiteren Anstieg der Spannung an der Energieversorgungsnetzseite des Leistungsschalters 2, wie dies das Diagramm a der Figur 3 deutlich zeigt. Außerdem sinkt der Strom im Leitungsabgang 1 ab und erreicht zu einem Zeitpunkt t4 einen Wert, der dem Stromschwellenwert I_{S} entspricht. Daraufhin verschwindet das Stromüberschreitungssignal I_{ü}, wie das Diagramm e der Figur 3 erkennen läßt. Damit wird zum Zeitpunkt t4 die Anregung der Überspannungs-Schutzanordnung 12 überhaupt zurückgenommen, so daß an der Verbindungsleitung 29 ein Auslösesignal Au nicht weiter ansteht.

Wird nach Beseitigung des Fehlers im Leitungsabgang 1 oder im Verbraucher 7 nach dem Zeitpunkt t4 zum Zeitpunkt t5 wieder ein Einschaltbefehl von der Überspannungs-Schutzanordnung 12 an den Leistungsschalter 2 gegeben, dann fällt die Spannung U(t) gemäß dem Diagramm a der Figur 3 ab, und der Strom I(t) steigt gemäß dem Diagramm b der Figur 3 an. Eine Anregung wird von der Überspannungs-Schutzanordnung 12 zu diesem Zeitpunkt nicht gegeben, weil der Strom I(t) im Leitungsabgang 1 zunächst unterhalb des Stromschwellenwertes I_{S} liegt. Erst zum Zeitpunkt t6 übersteigt der Strom den Stromschwellenwert I_{S}, wodurch ein Stromüberschreitungssignal I_{ü} an das eine Zeitglied 17 gegeben wird. Dieses Zeitglied bewirkt die oben bereits erwähnte Zeitverzögerung T_{S}, so daß es erst zum Zeitpunkt t7 am Ausgang des ODER-Gliedes 19 als "1"-Signal wirksam wird. Bei dem dargestellten Beispiel wird nach dem Einschaltbefehl, also vom Zeitpunkt t5 ab, überprüft, ob die abfallende Spannung U(t) einen Rückfallspannungswert U_{R} unterschreitet. Geschieht dies - wie dargestellt - in der Zeit bis zum Zeipunkt t7, dann erfolgt keine erneute Anregung der Überspannungs-Schutzanordnung 12. Ist dagegen in Abweichung von der dargestellten Situation zum Zeitpunkt t7 die Spannung U(t) am Leitungsabgang 1 nicht unter den Rückfallspannungswert U_{R} gesunken, dann wird an dem Eingang 23 des UND-Gliedes 24 ein "1"-Signal gebildet, auf das hin nach Ablauf des weiteren Zeitgliedes 27 am Ausgang 28 ein Anregesignal erzeugt wird.

In Abweichung von dem dargestellten Ausführungsbeispiel ist es auch möglich, ein Anregesignal jeweils leitungsselektiv zu bilden, indem die oben erläuterten Untersuchungen mit Strom und Spannung jeweils einer Leitung für sich getrennt durchgeführt werden.

Bei der erfindungsgemäßen Anordnung ist also durch die Bildung des Stromüberschreitungssignals I_{ü} dafür gesorgt, daß nach einer Anregung der Überspannungs-Schutzanordnung 12 infolge starken Spannungsanstiegs die Anregung nicht ständig aufrecht erhalten wird, sondern selbsttätig dann zurückgenommen wird, wenn das Stromüberschreitungssignal I_{ü} verschwindet. Nach einer Beseitigung des Fehlers im Leitungsabgang 1 oder im Motor 7 kann daher ohne weitere Schaltungsmaßnahmen nach dem Einschalten des Leistungsschalters 2 die Überspannungs-Schutzanordnung 12 ihre Funktion wieder selbsttätig aufnehmen.

Abschließend ist noch anzumerken, daß durch ein weiteres UND-Glied 30 gemäß Fig. 2 eine Signalgabe darüber möglich ist, ob eine Anregung der Überspannungs-Schutzanordnung 12 unter Verwendung des Stromüberschreitungssignals I_{ü} erfolgt ist. Ein Signal am Ausgang eines zusätzlichen UND-Gliedes 31 zeigt an, daß eine Anregung nur mittels des Spannungsüberschreitungssignal U_{ü} erfolgt ist, was durch die Stellung des Kontaktes 20 in der Lage "Aus" möglich ist.

## Patentansprüche

1. Anordnung mit einem an ein elektrisches Energieversorgungsnetz über einen Leistungsschalter angeschlossenen Leitungsabgang mit mindestens einem Verbraucher und mit einer Spannungs-Schutzanordnung für den mindestens einen Verbraucher, bei der die Spannungs-Schutzanordnung über eine Spannungswandler-Anordnung angeschlossen ist,
**dadurch gekennzeichnet,** daß
- bei einer Spannungs-Schutzanordnung als Überspannungs-Schutzanordnung die Schutzanordnung (12) über die Spannungswandler-Anordnung (8) mit dem energieversorgungsnetzseitigen Anschluß des Leistungsschalters (2) verbunden ist,
an die Überspannungs-Schutzanordnung (12) eine im Zuge des Leistungsschalters (2) liegende Stromwandler-Anordnung (3) angeschlossen ist und
- die Überspannungs-Schutzanordnung (12) so ausgebildet ist, daß sie ein Spannungsüberschreitungssignal (U_{ü}) erzeugt, wenn die mittels der Spannungswandler-Anordnung (8) erfaßte Spannung oberhalb eines vorgegebenen Spannungsschwellenwertes (Uₛ) liegt, und ein Stromüberschreitungssignal (I_{ü}) bildet, wenn der mittels der Stromwandler-Anordnung (3) ermittelte Strom oberhalb eines vorgegebenen Stromschwellenwertes (Iₛ) liegt, sowie ein Anregesignal (An) erzeugt, wenn das Spannungsüberschreitungssignal (U_{ü}) und das Stromüberschreitungssignal (I_{ü}) gleichzeitig auftreten.

2. Anordnung nach Anspruch 1,
**dadurch gekennzeichnet,** daß
die Überspannungs-Schutzanordnung (12) derart ausgebildet ist, daß sie auf das Anregesignal (An) hin nach einer vorgegebenen Zeitverzögerung (Tᵤ) ein Auslosesignal (Au) an den Leitungsschalter (2) abgibt.

3. Anordnung nach Anspruch 1 oder 2,
**dadurch gekennzeichnet,** daß
die Überspannungs-Schutzanordnung (12) so ausgebildet ist, daß sie nach einem auf das Auslösesignal (Au) folgenden Einschaltbefehl an den Leistungsschalter (2) das Stromüberschreitungssignal (I_{ü}) nach einer vorgewählten Zeitdauer (Tₛ) wirksam werden läßt.

4. Anordnung nach Anspruch 3,
**dadurch gekennzeichnet,** daß
die Überspannungs-Schutzanordnung (12) so ausgebildet ist, daß sie nach dem Einschaltbefehl die Spannung auf Unterschreiten eines vorgewählten Rückfallspannungswertes (U_{R}) überprüft, wobei der Rückfallspannungswert (U_{R}) unterhalb des vorgegebenen Spannungsschwellenwertes (Uₛ) liegt, und ein Betätigungssignal erzeugt, wenn das Unterschreiten des Rückfallspannungswertes (U_{R}) nach Ablauf der vorgewählten Zeitdauer (T_{S}) erfolgt.
